# EUROPEAN PATENT APPLICATION

(11) **EP 4 738 820 A1**
(43) Date of publication of application: **06.05.2026**
(21) Application number: 24307215.4
(22) Date of filing: 20.12.2024
(51) Int. Cl.: H04N 19/12, H04N 19/157, H04N 19/176, H04N 19/61, H04N 19/70

(54) **VIRTUAL INTRA PREDICTION MODE SELECTION IN MULTIPLE TRANSFORM SET SELECTION**

(30) Priority: 05.11.2024 EP 24306863
(71) Applicant: InterDigital CE Patent Holdings, SAS, 75017 Paris (FR)
(72) Inventor: BONNINEAU, Charles, MONTREAL, H2J 1G1 (CA); PURI, Saurabh, SAINT-LAZARE, J7T 0P6 (CA); NASER, Karam, 35250 MOUAZE (FR); LE LEANNEC, Fabrice, 35830 BETTON (FR)
(74) Representative: Vossius & Partner Patentanwälte Rechtsanwälte mbB

(57) **Abstract**

A device (e.g., video encoder or video decoder) may determine transform sets for MTSS. For example, an MTSS indication (e.g., MTSS flag) may be obtained. The MTSS flag may be used to determine a transform set. A histogram of gradients (HoG) may be obtained. A VIPM (e.g., first VIPM) may be obtained, for example, based on the HoG. Whether the MTSS indication is enabled may be determined. Based on a determination that the MTSS indication is not enabled, a mode-specific transform set corresponding to VIPM may be obtained. Inverse transform may be performed based on the obtained transform set.

## Description

### CROSS-REFERENCE TO RELATED APPLICATOINS

The application claims the benefit of European Patent Application Number 24306863.2, filed November 5, 2024, the contents of which are incorporated by reference in their entirety herein.

### BACKGROUND

The present application is related to video coding systems that may be used to compress digital video signals, e.g., to reduce the storage and/or transmission bandwidth needed for such signals. Video coding systems may include, for example, block-based, wavelet-based, and/or object-based systems.

### SUMMARY

Systems, methods, and instrumentalities are configured for virtual intra prediction mode selection in multiple transform set selection. Multiple transform set selection (MTSS) may use mode-specific transform sets and/or virtual intra prediction mode (VIPM)-based transform sets. For example, transform set candidates may be derived based on the mode-specific transform set and/or based on an angular mode transform set, for example, using a VIPM.

A device (e.g., video encoder or video decoder) may determine transform sets for MTSS. For example, an MTSS indication (e.g., MTSS flag) may be obtained. The MTSS flag may be used to determine a transform set. A histogram of gradients (HoG) may be obtained. A VIPM (e.g., first VIPM) may be obtained, for example, based on the HoG. Whether the MTSS indication is enabled may be determined. Based on a determination that the MTSS indication is not enabled, a mode-specific transform set corresponding to VIPM may be obtained. Inverse transform may be performed based on the obtained transform set.

Based on a determination that the MTSS indication is enabled, an angular mode transform set corresponding to VIPM may be obtained. A second transform set may be obtained. The second transform set may be obtained based on a second VIPM obtained from the HoG. Whether a difference between the first VIPM and the second VIPM is greater than or equal to a threshold may be determined. The second transform set may be obtained based on whether the difference between the first VIPM and the second VIPM is greater than or equal to a threshold. For example, the second transform set may be obtained based on the second VIPM if the difference between the first VIPM and the second VIPM is greater than or equal to a threshold. The second transform set obtained based on the second VIPM may be from a mode-specific transform set. For example, the second transform set may be obtained based on the first VIPM if the difference is not greater than or equal to the threshold. The second transform set obtained based on the first VIPM may be from an angular transform set.

A device (e.g., video encoder or video decoder) may determine transform sets for MTSS. The device may obtain a HoG associated with a block. The device may obtain a VIPM based on the HoG. The device may obtain a first transform set and a second transform set based on the obtained VIPM. For example, a mode-specific transform set corresponding to the obtained VIPM may be obtained as the first transform set. For example, an angular mode transform set corresponding to the obtained VIPM may be obtained as the second transform set. The device may select (e.g., from at least the first transform set and the second transform set) a transform set, for example, based on an MTSS indication associated with the block. For example, based on a determination to use the first transform set (e.g., based on an MTSS indication), a transform kernel associated with the first transform set may be used to perform the inverse transformation or transformation. For example, based on a determination to use the second transform set (e.g., based on an MTSS indication), a transform kernel associated with the second transform set may be used to perform the inverse transformation or transformation. The device may perform an inverse transformation or a transformation based on the selected transform set. The device (e.g., video encoder) may include (e.g., in video data) an MTSS indication of the selected transform set.

The device may obtain a first VIPM based on the HoG and a second VIPM based on the VIPM. The device may determine whether a difference between the first VIPM and the second VIPM is less than a value. The device may obtain a third transform set based on the second VIPM, for example, based on a determination that the difference between the first VIPM and the second VIPM is less than the value. The device may obtain a third transform set based on the first VIPM, for example, based on a determination that the difference between the first VIPM and the second VIPM is not less than the value. The third transform set may be selected as the selected transform set.

The device may obtain a first VIPM based on the HoG and a second VIPM based on the VIPM. The device may determine whether a difference between the first VIPM and the second VIPM is less than a value. An angular mode transform set corresponding to the first VIPM may be selected as the selected transform, for example, based on a determination that the difference between the first VIPM and the second VIPM is less than the value. A mode-specific mode transform set corresponding to the second VIPM may be selected as the selected transform, for example, based on a determination that the difference between the first VIPM and the second VIPM is not less than the value.

The device may obtain a first VIPM based on the HoG and a second VIPM based on the VIPM. The device may determine whether a difference between the first VIPM and the second VIPM is less than a value. The device may determine a set of kernels based on the determination whether the difference between the first VIPM and the second VIPM is less than the value. For example, the determined kernels may be a subset of kernels associated with one or more of a mode-specific transform set or an angular mode transform set.

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings.
FIG. 1 shows an example system according to one or more embodiments of the present disclosure.
FIG. 2 shows an example video encoder according to one or more embodiments of the present disclosure.
FIG. 3 shows an example video decoder according to one or more embodiments of the present disclosure.
FIG. 4 illustrates an example explicit multiple transform selection (MTS) set selection (e.g., modeldx=4 and sizeldx=0).
FIG. 5 shows an example region of interest (ROI) for low-frequency non-separable transform (LFNST) 16.
FIG. 6 shows an example ROI for LFNST8.
FIG. 7 shows an example of block sizes for which non-separable primary transform (NSPT) may be applied where LFNST may be applied for the rest.
FIG. 8 illustrates an example decoder process of MTSS.
FIG. 9 illustrates an example decoding process of MTSS.
FIG. 10 illustrates an example VIPM1 and VIPM2 in a HoG.
FIG. 11 illustrates an example decoder process of adaptive VIPM derivation.

### DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

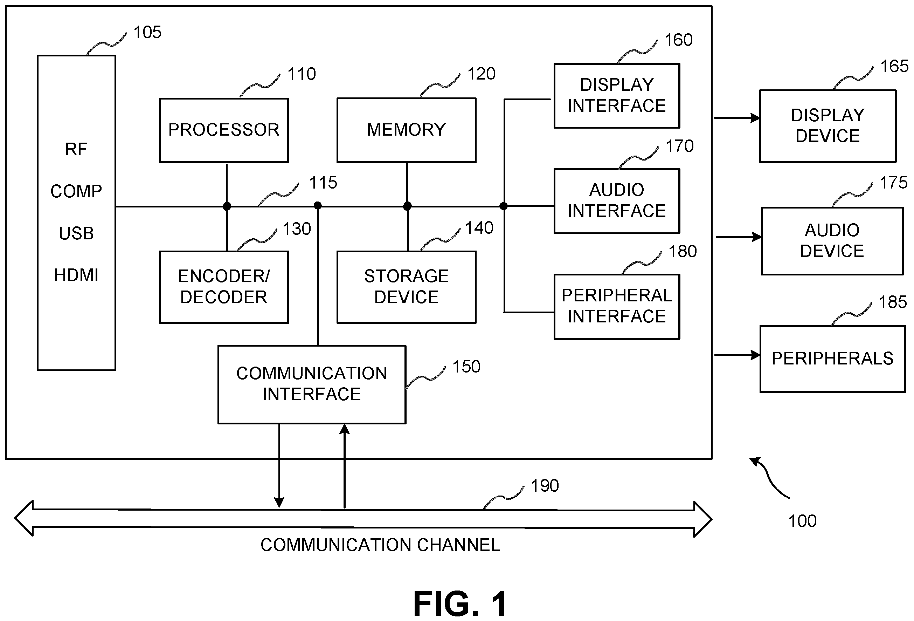

Referring to the drawings, there is shown in FIG. 1 a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 may include at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 may include at least one memory 120, for example, a volatile memory device and/or a non-volatile memory device. The system 100 may include a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 may include an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 may be used to store instructions and/or provide working memory for video encoding and decoding functions. In some embodiments, memory external to the processor 110 and/or the encoder/decoder module 130 (e.g., the memory 120 and/or the storage device 140) may be used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 may include a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

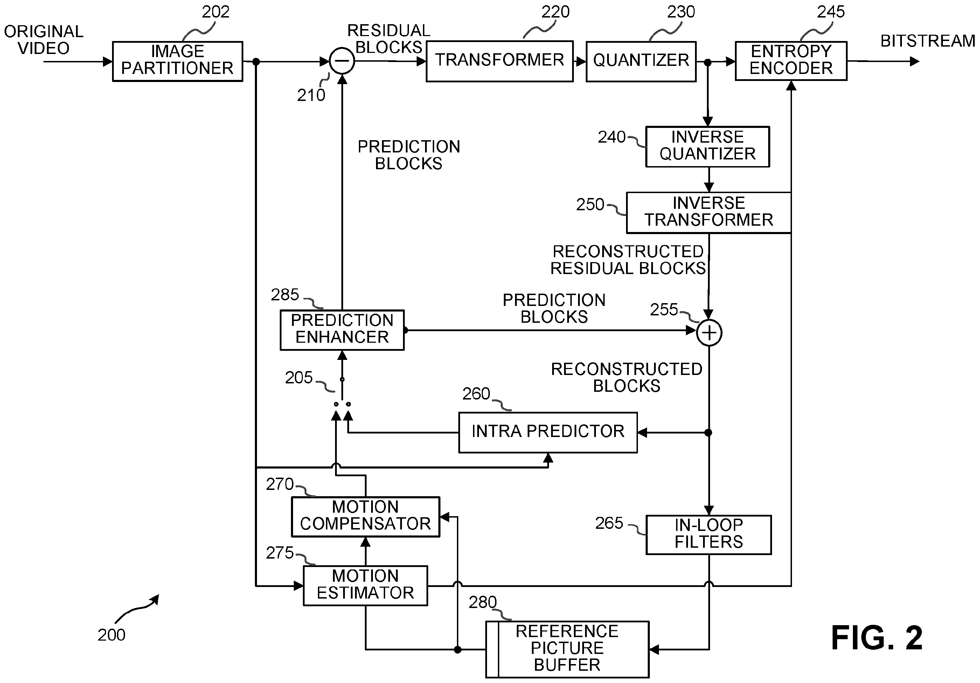

FIG. 2 is a block diagram illustrating an example video encoder 200 (e.g., block-based hybrid video encoder) that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (WC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

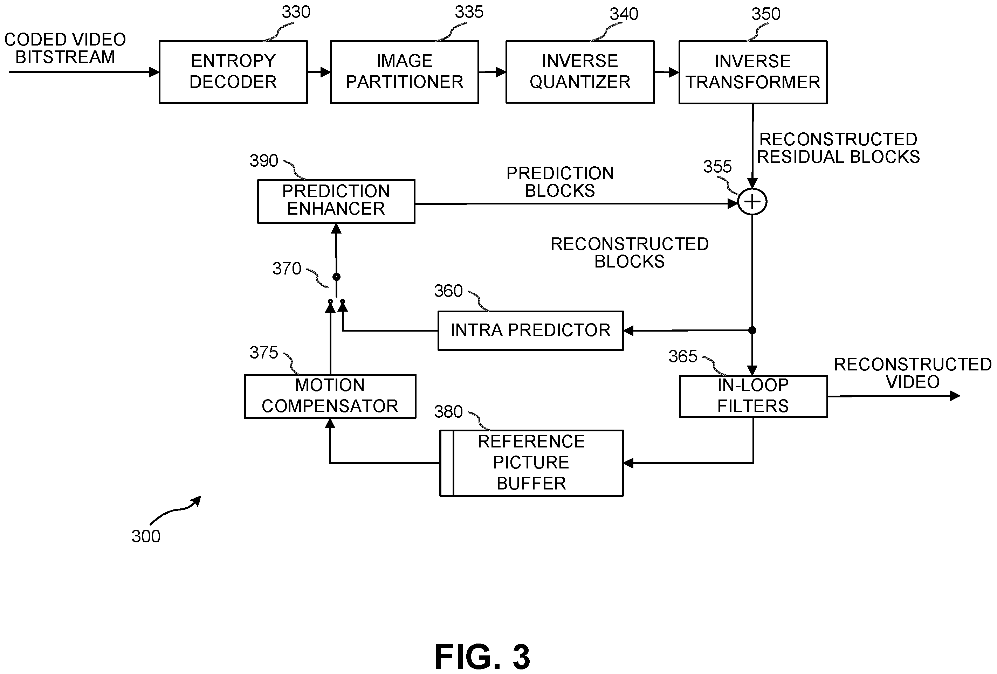

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video region formed by a video partition of any shape or size. The video region may be a video slice, a coding tree unit (CTU), or a CU (to which inter prediction or intra prediction can be applied), or a partition thereof, each of which can include samples of a luma component, Y, and chroma components, U and V (also denoted herein by C, Cb, Cr).

Referring generally to FIG. 2 and the video encoder 200, video data (e.g., one or more video frames) is encoded generally as described below. Prior to encoding, video data may be pre-processed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame) to be encoded is partitioned into CUs (blocks) by an image partitioner 202.

In general, a CU may include a luma block and associated chroma blocks. As such, functions of the video encoder 200 described herein as applied to a CU refer generally to the luma block and the respective chroma blocks. The CUs may be encoded using an intra prediction mode performed by an intra predictor 260. In intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (e.g., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are de-quantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 may be applied to the reconstructed image (formed by the reconstructed blocks). The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

FIG. 3 is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340 and inverse transformed by an inverse transformer 350 to decode (e.g., reconstruct) respective residual blocks. Depending on the selected prediction mode, a predicted block can be obtained at 370 from an intra predictor 360 (e.g., intra prediction) or from a motion compensator 375 (e.g., inter prediction) and may be enhanced (e.g., filtered) by a prediction enhancer 390, generating a prediction block. The reconstructed residual blocks are combined with prediction blocks (e.g. by an adder 355), resulting in reconstructed blocks.

In-loop filters 365 (e.g., DBF, BIF, SAO, and/or ALF) can be applied to the reconstructed image (formed by the reconstructed blocks), to output reconstructed (decoded) video. The filtered reconstructed image is also stored in a reference picture buffer 380 for reference by the motion compensator 375.

A post-decoding processor (not shown) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 2. The post-decoding processor can use metadata derived by the pre-encoding processor and/or signaled in the video bitstream.

Systems, methods, and instrumentalities are configured for virtual intra prediction mode selection in multiple transform set selection. Multiple transform set selection (MTSS) may use mode-specific transform sets and/or virtual intra prediction mode (VIPM)-based transform sets. For example, transform set candidates may be derived based on the mode-specific transform set and/or based on an angular mode transform set, for example, using a VIPM.

A device (e.g., video encoder or video decoder) may determine transform sets for MTSS. For example, an MTSS indication (e.g., MTSS flag) may be obtained. The MTSS flag may be used to determine a transform set. A histogram of gradients (HoG) may be obtained. A VIPM (e.g., first VIPM) may be obtained, for example, based on the HoG. Whether the MTSS indication is enabled may be determined. Based on a determination that the MTSS indication is not enabled, a mode-specific transform set corresponding to VIPM may be obtained. Inverse transform may be performed based on the obtained transform set.

Based on a determination that the MTSS indication is enabled, an special mode transform set corresponding to VIPM may be obtained. A second transform set may be obtained. The second transform set may be obtained based on a second VIPM obtained from the HoG. Whether a difference between the first VIPM and the second VIPM is greater than or equal to a threshold may be determined. The second transform set may be obtained based on whether the difference between the first VIPM and the second VIPM is greater than or equal to a threshold. For example, the second transform set may be obtained based on the second VIPM if the difference between the first VIPM and the second VIPM is greater than or equal to a threshold. The second transform set obtained based on the second VIPM may be from a mode-specific transform set. For example, the second transform set may be obtained based on the first VIPM if the difference is not greater than or equal to the threshold. The second transform set obtained based on the first VIPM may be from an angular transform set.

Transform coding may be improved, for example, in video coding. Transform sets may be selected in multiple transform set selection (MTSS). In MTSS, multiple (e.g., two) transform set candidates may be considered for a mode (e.g., special modes). Multiple (e.g., two) virtual intra prediction modes (VIPM) may be computed, for example, to infer their transform set in the intra MTS or LFNST/NSPT lookup-table (LUT). Transform sets may be dedicated to intra angular modes. A mode-specific transform set (e.g., new mode-specific transform set) may be used in specific (e.g., special) modes (e.g., decoder-side intra mode derivation (DIMD), template-based intra mode derivation (TIMD), spatial geometric partition mode (SGPM), intra template matching prediction (IntraTMP), matrix-based intra prediction (MIP), extrapolation-based intra prediction (EIP) and inter) in the ECM. The transform sets dedicated to intra angular modes (e.g., old transform sets) may be used in MTSS, for example, if there is a directionality (e.g., clear directionality) in the HoGs. A transform set selection strategy may be designed for MTSS, for example, where both a mode-specific transform set and a transform set dedicated to angular mode may be leveraged. A fixed method and/or an adaptative method may be used. The coding gain of MTSS may be improved, for example, as described herein.

In MTSS, multiple (e.g., two) VIPMs may be computed, for example, in order to obtain the transform set candidates. These VIPMs may use (e.g., generally rely on) the HoG of the reconstructed neighboring pixels in a template. The transform sets may be trained (e.g., originally trained) for intra directional angular modes.

A mode-specific transform set for NSPT may be used (e.g., designed) for special modes (e.g., DIMD, TIMD, SGPM, IntraTMP, MIP, EIP and inter). These mode-specific transform sets may be trained (e.g., specifically). The mode-specific transform sets may use (e.g., rely) on a VIPM. The transform set(s) dedicated to angular modes and the mode-specific transform set may be (e.g., both) used in MTSS using the same VIPM (e.g., instead of using two different VIPMs), for example, if a clear directionality is observed in the HoGs (e.g., two VIPMs are close to each other).

In examples, additional transform sets may be considered (e.g., in addition to angular mode transform sets and special-mode transform sets), for example, such as neural-network-based (NN-based) intra prediction transform sets. The transform sets considered in MTSS may be as described in Table 1 below, for example, with M being the number of transform set types that may be considered in MTSS and n, m, k, and I determining the number of VIPMs that may be used for each transform set type in MTSS. In examples, there may be multiple (e.g., two or more) VIPMs and/or transform sets dedicated to angular mode and/or mode-specific mode (e.g., more than two VIPMs, more than two transform sets dedicated to angular mode, more than two transform sets dedicated to mode-specific).

**Table 1**

| Angular mode transform sets | Special-mode transform sets | NN-intra transform sets | ... | Mode M transform sets |
|---|---|---|---|---|
| VIPM1 | VIPM1 | VIPM1 | ... | VIPM1 |
| VIPM2 | VIPM2 | VIPM2 | ... | VIPM2 |
| ... | ... | ... | ... | ... |
| VIPMn | VIPMm | VIPMk | ... | VIPMi |

An transform set index may be used to signal which transform set is selected.

A transform set selection strategy may be defined for MTSS. A fixed method and/or an adaptative method may be used for a transform set selection strategy.

Feature(s) associated with intra MTS are provided herein. In a coding tool, DST7 and DCT8 transform kernels may be used, e.g., in addition to DCT2. The kernels may be used for intra coding and/or inter coding. Transform skip may be used.

In a coding tool, one or more additional primary transforms, e.g., DCT5, DST4, DST1, and/or identity transform (IDT), may be employed. One or more MTS sets may be made dependent on a transform unit (TU) size and/or intra mode information. For blocks predicted using intra template matching prediction (IntraTMP), a decoder-side intra mode derivation (DIMD) procedure may be used on a prediction block, e.g., to derive an intra mode that is used for a transform selection. For example, a horizontal gradient and/or a vertical gradient may be calculated for a predicted sample, e.g., to build a Histogram of Gradients (HoG). The intra prediction mode with one or more histogram amplitude values (e.g., the largest histogram amplitude values) may be used to determine the MTS transform set.

One or more (e.g., 16) different TU sizes may be considered. For a TU size, five different classes may be considered, e.g., depending on intra mode information. For a class, one, four, and/or six different transform pairs may be considered. The number of intra MTS candidates may be adaptively selected (e.g., between the one, four, and/or six MTS candidates). For example, the number of intra MTS candidates may be adaptively selected between the one, four, and/or six MTS candidates depending on the sum of the absolute value of transform coefficients. The sum may be compared against thresholds (e.g., two fixed thresholds) to determine the total number of allowed MTS candidates as described herein:
1 candidate: sum <= th0
4 candidates: th0 < sum <= th1
6 candidates: sum > th1

A total of 80 (e.g., 16 transform sizes times 5 classes) different classes may be considered. One or more of the different classes may share the same transform set. For example, in a video coding device, 58 (e.g., less than 80) unique entries may exist in the resultant look-up table (LUT).

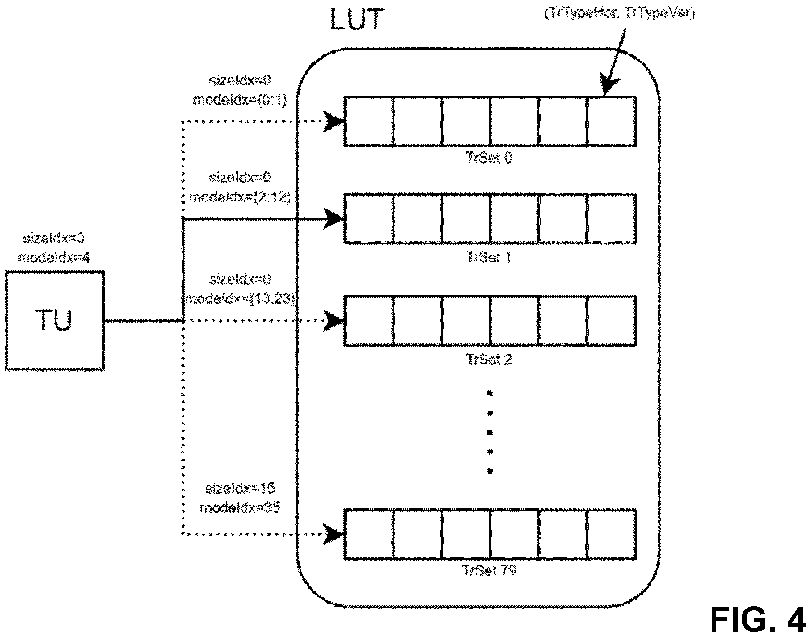

FIG. 4 illustrates an example explicit MTS set selection (e.g., modeldx=4 and sizeldx=0). For angular modes, a joint symmetry over a TU shape and intra prediction may be considered. A mode i (e.g., i > 34) with a TU shape A×B may be mapped. For example, a mode i (e.g., i > 34) with a TU shape A×B may be mapped to the same class corresponding to the mode j = (68 - i) with a TU shape B×A. For a transform pair, the order of the horizontal transform kernel and the vertical transform kernel may be swapped. For example, a 16x4 block with mode 18 (e.g., horizontal prediction) and a 4x16 block with mode 50 (e.g., vertical prediction) may be mapped to the same class. The vertical and horizontal transform kernels may be swapped. For the wide-angle modes, an angular mode (e.g., the nearest angular mode) may be used for the transform set determination. For example, mode 2 may be used for one or more (e.g., all) of the modes between -2 and -14. Mode 66 may be used for mode 67 to mode 80. A dedicated mode index may be assigned to a matrix-based intra prediction (MIP), e.g., resulting in a total of 36 possible modes entries in the LUT. An example of transform set selection in the LUT for a given TU size and intra mode may be illustrated in FIG. 4.

IDT may be applied for one or more blocks that are 16x16 or smaller and/or may have intra modes within a range around horizontal and/or vertical intra directions (e.g., the proximity of horizontal and/or vertical intra directions). The proximity may be defined by a threshold that depends on the block size. For example, if the transform index is equal to 3 and a block is 16x16 or smaller and has intra modes within the proximity of horizontal and/or vertical intra directions, the horizontal and/or vertical identity transform may be applied.

Technique(s) described herein may be used for LFNST. The LFNST design may be extended as follows. The number of LFNST sets (S) and candidates (C) in a set may be extended to S=35 and C=3, and the LFNST set (IfnstTrSetldx) for a given intra mode (predModelntra) may be derived according to the following formula:
For predModelntra < 0, IfnstTrSetldx may be equal to 2
IfnstTrSetldx = predModelntra, for predModelntra in [0,34]
IfnstTrSetldx = 68 - predModelntra, for predModelntra in [35,66]

Three different kernels, LFNST4, LFNST8, and LFNST16, may be defined to indicate LFNST kernel sets and may be applied to 4xN/Nx4 (N≥4), 8xN/Nx8 (N≥8), and MxN (M, N≥16), respectively.

The kernel dimensions may be specified by:
(LFSNT4, LFNST8*, LFNST16*) = (16x16, 32x64, 32x96)

The forward LFNST may be applied to the top-left low frequency region, which may be called region-of-interest (ROI). When LFNST is applied, primary-transformed coefficients that exist in the region other than ROI may be zeroed out.

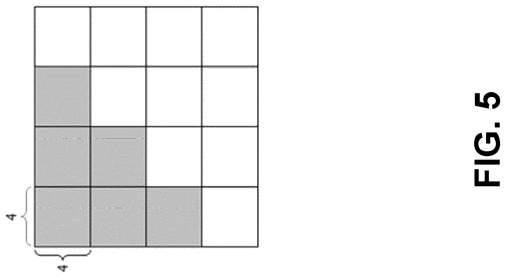

FIG. 5 shows an example ROI for LFNST16. As shown in FIG. 5, the ROI may comprise six 4x4 sub-blocks, which may be consecutive in scan order. Since the number of input samples may be 96, a transform matrix for forward LFNST16 may be Rx96. For example, R may be chosen to be 32 and 32 coefficients (e.g., two 4x4 sub-blocks) may be generated from forward LFNST16. The 32 coefficients may be placed following coefficient scan order.

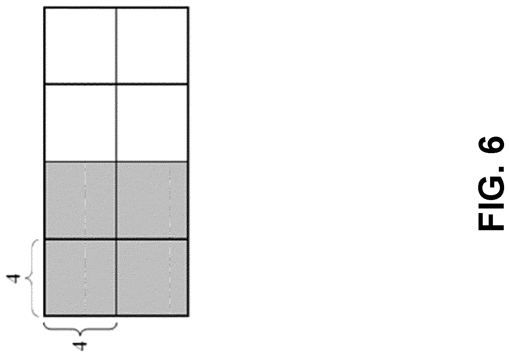

FIG. 6 shows an example ROI for LFNST8. The forward LFNST8 matrix may be Rx64 and R may be chosen to be 32. The generated coefficients may be located in the same manner as with LFNST16.

The mapping from intra prediction modes to these sets may be shown in Table 2.

**Table 2. Example mapping of intra prediction modes to LFNST set index**

| | | | | | | | | | | | | | | | | |
|---|---|---|---|---|---|---|---|---|---|---|---|---|---|---|---|---|
| **Intra pred. mode** | -14 | -13 | -12 | -11 | -10 | -9 | -8 | -7 | -6 | -5 | -4 | -3 | -2 | -1 | 0 | 1 |
| **LFNST set index** | 2 | 2 | 2 | 2 | 2 | 2 | 2 | 2 | 2 | 2 | 2 | 2 | 2 | 2 | 0 | 1 |
| **Intra pred. mode** | **2** | **3** | **4** | **5** | **6** | **7** | **8** | **9** | **10** | **11** | **12** | **13** | **14** | **15** | 16 | 17 |
| **LFNST set index** | **2** | **3** | **4** | **5** | **6** | **7** | **8** | **9** | **10** | **11** | **12** | **13** | **14** | **15** | 16 | 17 |
| **Intra pred. mode** | 18 | 19 | 20 | 21 | 22 | 23 | 24 | 25 | 26 | 27 | 28 | 29 | 30 | 31 | 32 | 33 |
| **LFNST set index** | 18 | 19 | 20 | 21 | 22 | 23 | 24 | 25 | 26 | 27 | 28 | 29 | 30 | 31 | 32 | 33 |
| **Intra pred. mode** | 34 | 35 | 36 | 37 | 38 | 39 | 40 | 41 | 42 | 43 | 44 | 45 | 46 | 47 | 48 | 49 |
| **LFNST set index** | 34 | 35 | 36 | 37 | 38 | 39 | 40 | 41 | 42 | 43 | 44 | 45 | 46 | 47 | 48 | 49 |
| **Intra pred. mode** | 50 | 51 | 52 | 53 | 54 | 55 | 56 | 57 | 58 | 59 | 60 | 61 | 62 | 63 | 64 | 65 |
| **LFNST set index** | 18 | 17 | 16 | 15 | 14 | 13 | 12 | 11 | 10 | 9 | 8 | 7 | 6 | 5 | 4 | 3 |
| **Intra pred. mode** | 66 | 67 | 68 | 69 | 70 | 71 | 72 | 73 | 74 | 75 | 76 | 77 | 78 | 79 | 80 | |
| **LFNST set index** | 2 | 2 | 2 | 2 | 2 | 2 | 2 | 2 | 2 | 2 | 2 | 2 | 2 | 2 | 2 | |

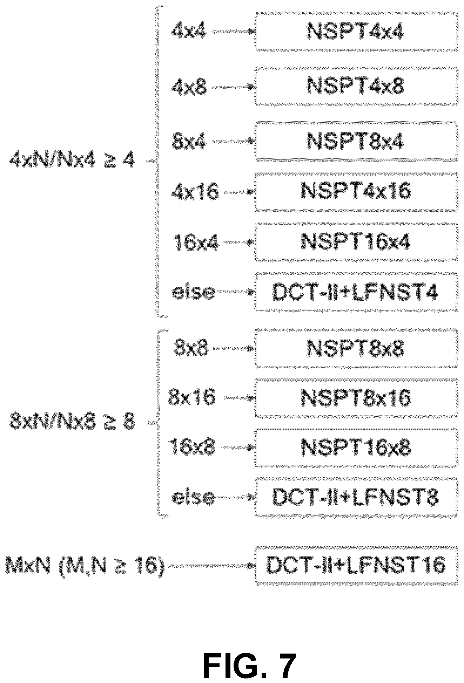

NSPT (Non-Separable Primary Transform) may be designed to replace the two stages of transform (e.g., DCT2-LFNST) with a single non-separable transform. FIG. 7 shows an example of block sizes for which non-separable primary transform (NSPT) may be applied where LFNST may be applied for the rest. As shown in FIG. 7, NSPT may be allowed (e.g., only allowed) for small blocks.

NSPTs may comprise 35 sets with 3 candidates in a (e.g., each) set. For example, the kernels of NSPT may have the following shapes: (NSPT4x4: 16x16); (NSPT4x8/NSPT8x4: 32x20); (NSPT8x8: 64x32); (NSPT4x16/NSPT16x4: 64x24); or (NSPT8x16/NSPT16x8: 128x40). The 12, 32, 40 and 88 coefficients may be zeroed-out, for example using (NSPT4x8/NSPT8x4), (NSPT8x8), (NSPT4x16/NSPT16x4) and (NSPT8x16/NSPT16x8) respectively.

A LFNST/NSPT transform set (e.g., new LFNST/NSPT transform sets) may be added for intra special modes inter. A first LFNST/NSPT set may be applied for blocks using TIMD, DIMD, EIP, MIP or SGPM. The second LFNST/NSPT set may be applied for blocks using IntraTMP and inter CUs.

Multiple transform set selection (MTSS) may be performed for LFNST/NSPT. The LFNST/NSPT transform set may be decided (e.g., implicitly decided) by an intra prediction mode (IPM). For a block coded with PLANAR, DC or directional modes, the IPM may, for example, be set as the intra prediction mode itself. For a DIMD coded block, the IPM may, for example, be set as the best mode derived by the DIMD process with neighboring reconstructed pixels. For a TIMD coded block, the IPM may, for example, be set as the best mode derived by the TIMD process. For a MIP or ITMP coded block, the IPM may, for example, be set as the best mode derived by the DIMD process with the prediction. For an SGPM coded block, the IPM may, for example, be set as the mode corresponding to the split mode of SGPM.

The prediction strategies of DIMD, TIMD, SGPM, MIP, EIP and/or ITMP may be different from normal intra prediction modes like PLANAR, DC, and directional modes. DIMD, TIMD, SGPM and ITMP may allow combination of multiple predictions. MIP may make a prediction using matrix calculation. ITMP may reference the reconstructed region in the current picture. The prediction residual may illustrate different feature(s) from the derived IPM.

MTSS may allow CUs coded with DIMD, TIMD, MIP, EIP, SGPM and/or ITMP to select one LFNST/NSPT transform set out of two candidate sets. If the current block is coded with DIMD, TIMD, MIP, EIP, SGPM, or ITMP and LFNST/NSPT is used, a (e.g., one more) bin may be employed to indicate whether the first candidate transform set or the second candidate transform set is selected. The first candidate transform set may remain (e.g., the same as in a current version of ECM). The second candidate transform set may be derived by the DIMD process with neighboring reconstructed pixels. If a TIMD coded block applies fusion, the second TIMD IPM may be considered first to derive the second candidate set. For a SGPM coded block, the two IPM that SGPM uses may be considered first to derive the second candidate set. The difference between the first and second IPM may be larger than 4 (e.g., to maintain the diversity).

One or more of the following VIPMs (e.g., as shown in Table 3) may be considered for special intra modes:

**Table 3: VIPM1 and VIPM2 derivation strategies**

| | VIPM1 | VIPM2 |
|---|---|---|
| DIMD, OBIC, TIMD | The 1^{st} IPM used in current mode | The 2^{nd} IPM used in current mode |
| SGPM, MIP, EIP, ITMP | The 1^{st} IPM derived by HoG of prediction | The 2^{nd} IPM derived by HoG of prediction |

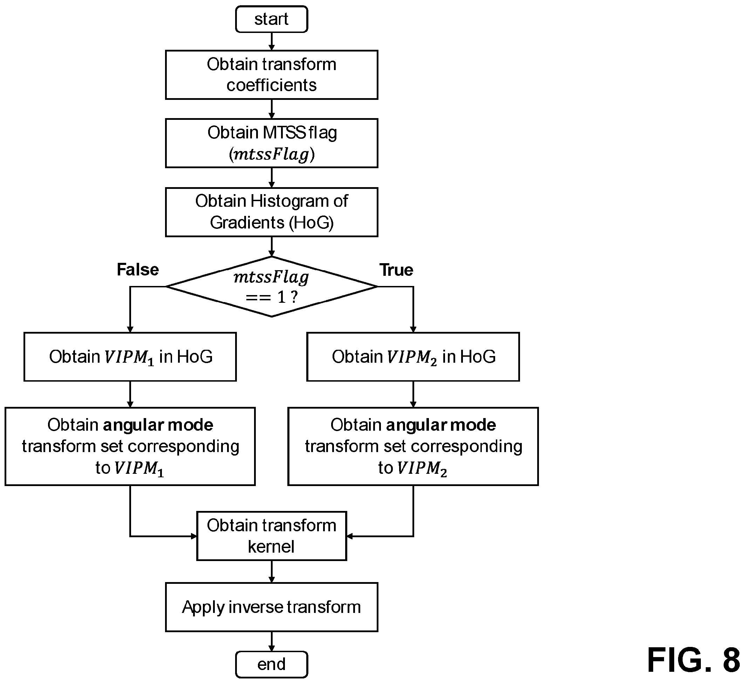

FIG. 8 illustrates an example decoder process of MTSS. As shown in FIG. 8, transform coefficients may be obtained. As shown in FIG. 8, an MTSS indication (e.g., flag, such as, for example, mtssFlag) may be obtained. As shown in FIG. 8, a histogram of gradients (HoG) may be obtained. As shown in FIG. 8, whether the MTSS flag is set to 1 may be determined. Based on a determination that the MTSS indication is not set to one, VIPM1 may be obtained in the HoG. An angular mode transform set may be obtained, for example, corresponding to VIPM1. Based on a determination that the MTSS indication is set to one, VIPM2 may be obtained in the HoG. The angular mode transform set may be obtained, for example, corresponding to VIPM2. A transform kernel may be obtained. Inverse transform may be applied.

MTSS may use mode-specific transform sets and/or VIPM-based transform sets.

A transform set may be kept from the (e.g., original) angular mode transform sets in MTSS. In examples, the first transform set candidate may be derived from the mode-specific transform sets using VIPM1, and the secondary transform set may be derived from the (e.g., original) angular mode transform sets using VIPM1.

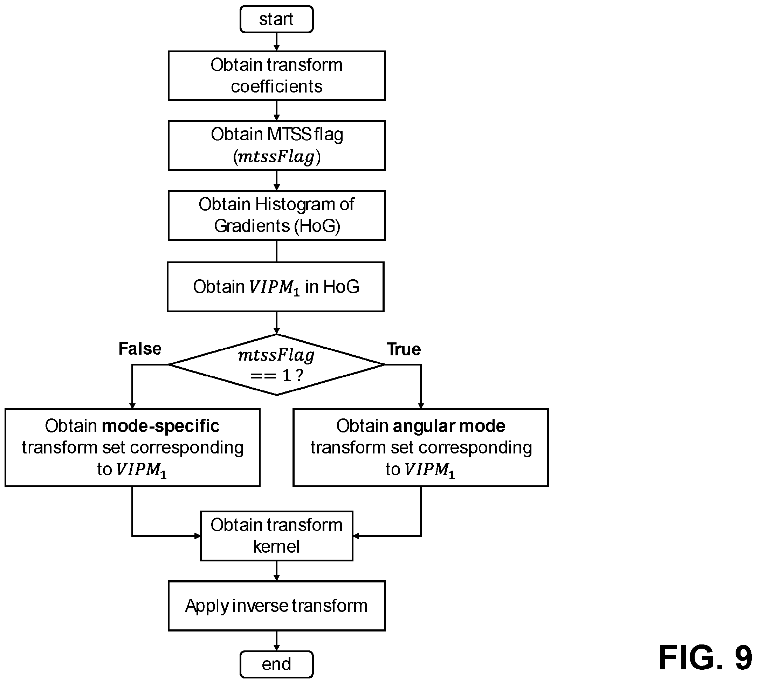

FIG. 9 illustrates an example decoding process of MTSS. As shown in FIG. 9, transform coefficients may be obtained. As shown in FIG. 9, an MTSS indication (e.g., MTSS flag, such as, for example, mtssFlag) may be obtained. As shown in FIG. 9, whether the MTSS indication is set to 1 may be determined. Based on a determination that the MTSS indication is not set to one, a mode-specific transform set may be determined. Based on a determination that the MTSS indication is set to one, a HoG may be obtained. VIPM1 may be obtained, for example, based on the HoG. An angular mode transform set corresponding to VIPM1 may be obtained. A transform kernel may be obtained. Inverse transform may be applied.

In examples, the first transform set candidate may be derived from the mode-specific transform sets using VIPM1 and the secondary transform set may be a planar transform set (e.g., from the (e.g., original) angular mode transform sets).

The examples described herein may be applied to NSPT transform sets (e.g., only NSPT transform sets).

Adaptative selection of a secondary transform set may be performed, for example, based on HoG statistics.

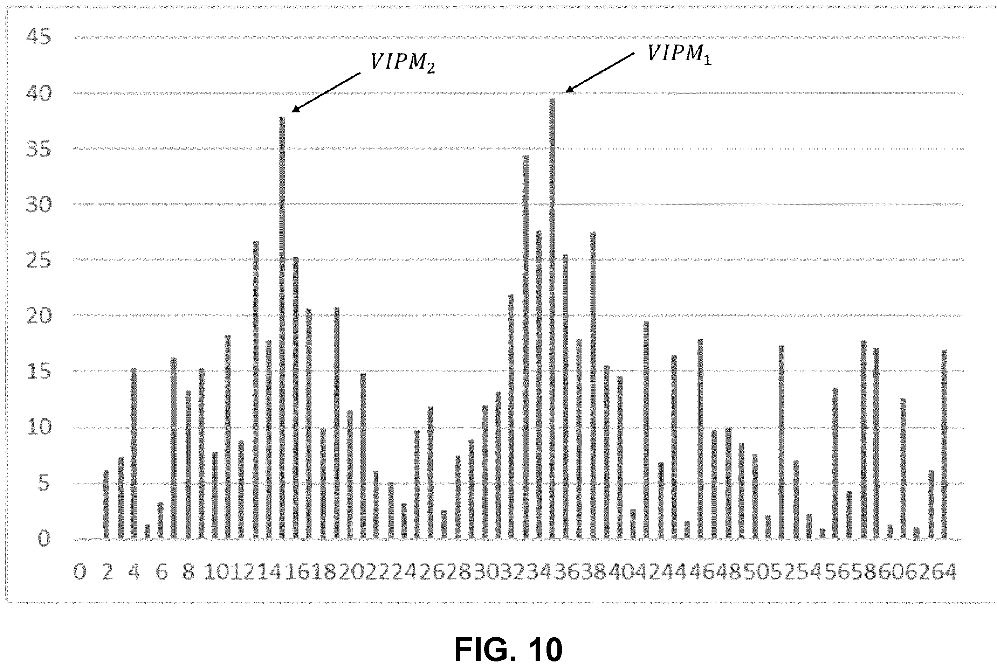

The statistics of the histogram of gradients (HoG) may be leveraged, for example, to determine which transform sets are used for MTSS. The nature of the HoG statistics may give useful information about the directionality of the block. FIG. 10 illustrates an example VIPM1 and VIPM2 in a HoG. For example, FIG. 10 shows that the VIPM1 and the VIPM2 may be different (e.g., significantly different), for example, which may suggest that the directionality of the block is not mainly driven toward one direction.

In examples, the difference between the VIPM1 and the VIPM2 may be used to determine which VIPM may be used to determine which VIPM and/or transform set type may be used to derive the transform set.

The difference between the first VIPM and second VIPM may be compared to a threshold (e.g., Th). If the difference is lower than Th (e.g., the two VIPMs are close to each other), VIPM1 may be used to derive the secondary transform set in MTSS, and the transform set may come from the (e.g., original) angular transform set). Otherwise, VIPM2 may be used to derive the secondary transform set in MTSS, and the transform set may come from the mode-specific transform sets.

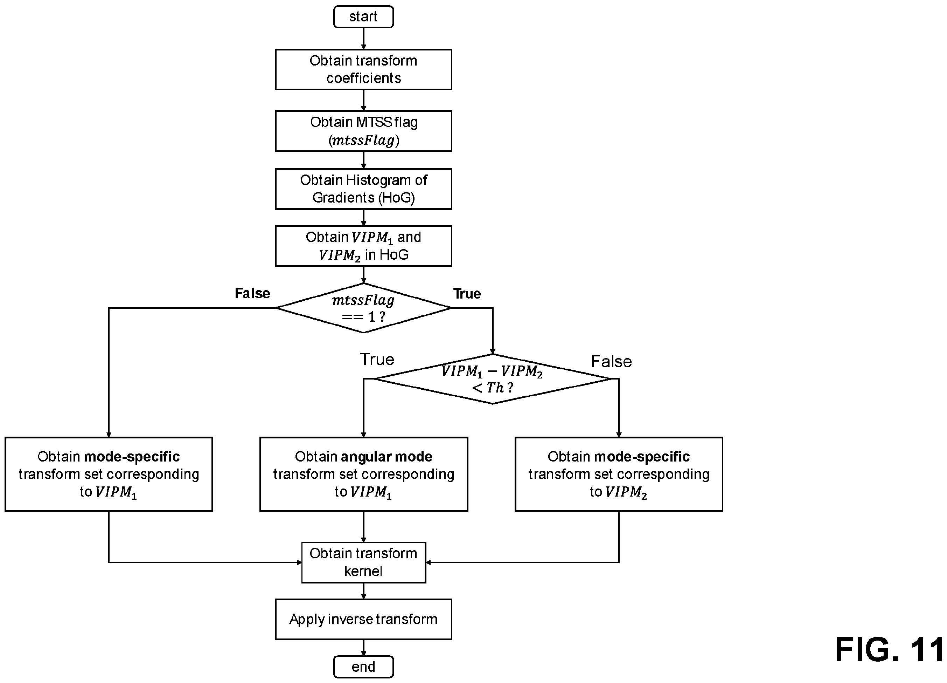

FIG. 11 illustrates an example decoder process of adaptive VIPM derivation. As shown in FIG. 11, transform coefficients may be obtained. As shown in FIG. 11, an MTSS indication (e.g., MTSS flag, such as, for example, mtssFlag) may be obtained. As shown in FIG. 11, an HoG may be obtained. As shown in FIG. 11, VIPM1 and/or VIPM2 may be obtained in the HoG. As shown in FIG. 11, whether the MTSS indication is set to 1 may be determined. Based on a determination that the MTSS indication is not set to one, a mode-specific transform set corresponding to VIPM1 may be obtained. Based on a determination that the MTSS indication is set to 1, a determination whether the difference between VIPM1 and VIPM2 is less than a threshold may be determined (e.g., whether VIPM1 - VIPM2 < Th). In examples, the difference between an intensity associated with the gradient of the primary VIPM and an intensity associated with the gradient of the secondary VIPM may be compared with the threshold (e.g., Th), for example, to determine which transform set derivation strategy may be used. Based on a determination that the difference between VIPM1 and VIPM2 is not less than a threshold, a mode specific transform set corresponding to VIPM2 may be obtained. Based on a determination that the difference between VIPM1 and VIPM2 is less than a threshold, an angular mode transform set corresponding to VIPM1 may be obtained. A transform kernel may be obtained. Inverse transform may be applied.

Adaptative MTSS may be performed, for example, using a subset of kernels.

A subset of LFNST/NSPT kernels (e.g., from the mode-specific transform sets and the angular mode transform sets) may be used in MTSS.

A subset of N kernels from the mode-specific transform sets derived from VIPM1 and a subset of M kernels from the angular mode transform sets derived from VIPM1 are used, for example, if the difference between the VIPM1 and the VIPM2 is less that the threshold, Th, A reduced number of kernels can be considered (e.g., in order to reduce the complexity), for example, if one VIPM (e.g., only one VIPM) is used.

In examples, the distance between the two VIPMs can be assessed, for example, as described herein.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the intra predictors and inter predictors described with respect to FIGs. 2 and 3 may be implemented as one or more modules and modified according to the various embodiments of the present disclosure.

The various embodiments described herein provide at least the following features, devices or aspects, alone or on any combination, across various claim categories and types:
i. Encoding, into coded video data, syntax elements that can enable the decoder to decode the coded video data, according to any of the embodiments described herein.
ii. Video data (e.g., a bitstream) that may include one or more of the described syntax elements, or variations thereof, whether transmitted, stored, or otherwise made available.
iii. Creating, transmitting, receiving, and/or decoding of the bitstream.
iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data in order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, which can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:
i. session description protocol (SDP), for example as described in RFCs and/or used in conjunction with real-time transport protocol (RTP) transmission.
ii. hypertext transfer protocol (HTTP) live Streaming (HLS) manifest transmitted over HTTP.
iii. dynamic adaptive streaming over HTTP (DASH) media presentation description (MPD) descriptors, for example as used in DASH and transmitted over HTTP.
iv. RTP header extensions, for example as used during RTP streaming.
v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter may be used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), bit savings are thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

## Claims

1. A video decoding method comprising:
obtaining a histogram of gradients (HoG) associated with a block;
obtaining a virtual intra prediction mode (VIPM) based on the HoG;
obtaining a first transform set and a second transform set based on the obtained VIPM;
select, from at least the first transform set and the second transform set, a transform set based on a multiple transform set selection (MTSS) indication associated with the block; and
perform an inverse transformation based on the selected transform set.

2. A video encoding method comprising:
obtaining a histogram of gradients (HoG) associated with a block;
obtaining a virtual intra prediction mode (VIPM) based on the HoG;
obtaining a first transform set and a second transform set based on the obtained VIPM;
select, from at least the first transform set and the second transform set, a transform set;
perform a transformation based on the selected transform set; and
include, in video data, a multiple transform set selection (MTSS) indication of the selected transform set.

3. The method of claim 1 or 2, wherein a mode-specific transform set corresponding to the obtained VIPM is obtained as the first transform set, and wherein an angular mode transform set corresponding to the obtained VIPM is obtained as the second transform set.

4. The method of claim 1 or 3, wherein based on a determination that the MTSS indication indicates to use the first transform set, a transform kernel associated with the first transform set is used to perform the inverse transformation, and based on a determination that the MTSS indication indicates to use the second transform set, a transform kernel associated with the second transform set is used to perform the inverse transformation.

5. The method of any of claims 1 to 4, wherein the obtained VIPM is a first VIPM, and wherein the method further comprises:
obtaining a second VIPM based on the HoG;
determining whether a difference between the first VIPM and the second VIPM is less than a value; and
based on a determination that the difference between the first VIPM and the second VIPM is less than the value, obtaining a third transform set based on the first VIPM, wherein the third transform set is selected as the selected transform set.

6. The method of any of claims 1 to 4, wherein the obtained VIPM is a first VIPM, and wherein the method further comprises:
obtaining a second VIPM based on the HoG;
determining whether a difference between the first VIPM and the second VIPM is less than a value; and
based on the determination that the difference between the first VIPM and the second VIPM is not less than the value, obtaining a third transform set based on the second VIPM, wherein the third transform set is selected as the selected transform set.

7. The method of any of claims 1 to 4, wherein the obtained VIPM is a first VIPM, and wherein the method further comprises:
obtaining a second VIPM based on the HoG;
determining whether a difference between the first VIPM and the second VIPM is less than a value, wherein the transform set for performing the inverse transform is selected further based on whether the difference between the first VIPM and the second VIPM is less than the value, wherein:
based on a determination that difference between the first VIPM and the second VIPM is less than the value, an angular mode transform set corresponding to the first VIPM is selected as the selected transform set, and
based on a determination that the difference between the first VIPM and the second VIPM is not less than the threshold, a mode-specific transform set corresponding to the second VIPM is selected as the selected transform set.

8. The method of any of claims 1 to 4, wherein the obtained VIPM is a first VIPM, and wherein the method further comprises:
obtaining a second VIPM based on the HoG;
determining whether a difference between the first VIPM and the second VIPM is less than a value; and
determining a set of kernels based on the determination whether the difference between the first VIPM and the second VIPM is less than the value.

9. The method of claim 8, wherein based on a determination that the difference between the first VIPM and the second VIPM is less than the value, the determined set of kernels comprises a subset of kernels associated with a mode-specific transform set corresponding to the first VIPM and comprises a subset of kernels associated with an angular transform set corresponding to the first VIPM.

10. The method of any of claims 1 or 3 to 9, wherein the method is performed by a video decoding device.

11. The method of any of claims 2, 3, or 5 to 9, wherein the method is performed by a video encoding device.

12. Video data comprising information representative of an output associated with the transformation generated according to one of the methods of any of claims 2 to 3 or 5 to 9.

13. A computer program product which is stored on a non-transitory computer readable medium and comprises program code instructions for implementing steps of a method according to at least one of claims 1 to 9 when executed by a processor.

14. A computer program comprising program code instructions for implementing steps of a method according to at least one of claims 1 to 9 when executed by a processor.
